# EUROPEAN PATENT APPLICATION

(11) **EP 2 772 646 A2**
(43) Date of publication of application: **03.09.2014**
(21) Application number: 13189310.9
(22) Date of filing: 18.10.2013
(51) Int. Cl.: F03D 11/00

(54) **Wind turbine generator**

(30) Priority: 28.02.2013 JP 2013038953
(71) Applicant: MITSUBISHI HEAVY INDUSTRIES, LTD., Tokyo 108-8215 (JP)
(72) Inventor: Yoshide, Takafumi, TOKYO, 108-8215 (JP); Noda, Yoshitomo, TOKYO, 108-8215 (JP); Miyake, Hisao, TOKYO, 108-8215 (JP)
(74) Representative: Intès, Didier Gérard André

(57) **Abstract**

Provided is a wind turbine generator in which a main bearing can be replaced without removing a rotor head or a main shaft in a wind turbine. A wind turbine generator includes: a hub; a main shaft (1) connected to the hub at one end; and a main bearing (2) that supports the main shaft (1), wherein the main bearing (2) is a roller bearing, an inner race (5) thereof being divided into a first member (51) in contact with the main shaft (1) on a radial inner side and provided with an axial through hole (51A), and a second member (52) provided with a raceway surface of a roller (4) on a radial outer side, the main shaft (1) includes a stepped portion (1A) having a larger diameter on the hub side, a threaded hole (1B) being provided in a wall surface thereof, and the first member (51) is fastened to the main shaft (1) with a bolt (53) that penetrates through the through hole (51A) to be screwed into the threaded hole (1B).

## Description

### {Technical Field}

The present invention relates to a wind turbine generator including a main bearing that supports a main shaft connected to a rotor.

### {Background Art}

Wind turbines used in wind power generation include a tower, a nacelle, a rotor head, and a plurality of blades. The blades rotate about a main shaft connected to a hub inside the rotor head. The main shaft is supported by a main bearing installed on a base inside the nacelle.
PTL 1 discloses a technique for pressing an inner race against a tapered surface formed on a rotary shaft by an inner race fixing member so as to easily replace a main bearing in a direct drive wind turbine generator. PTL 2 discloses a technique for facilitating attachment and detachment of a bearing in a rotating electrical machine that drives a railway vehicle.

### {Citation List}

### {Patent Literature}

{PTL 1}
   Japanese Unexamined Patent Application, Publication No. 2011-163420
{PTL 2}
   The Publication of Japanese Patent No. 4731639

### {Summary of Invention}

### {Technical Problem}

By the way, off-shore wind turbines out of the wind turbines used in wind power generation are constructed at sea, and it is thus not easy to access a place where the wind turbine is installed. Particularly, it costs a lot to replace large components such as a main bearing that supports a main shaft since a crane vessel is required for the replacement. Thus, there is a greater demand for ease of replacement of components in the off-shore wind turbines than in on-shore wind turbines.

One of measures of the ease of replacement is whether components can be replaced at the top of the tower. In conventional cases, however, the main bearing is integrated with the main shaft by shrink fitting, and the main shaft is also connected to the hub to which the blades are connected. Thus, when the main bearing is replaced, the entire nacelle is brought down to the bottom of the tower to perform the replacement. Since the main bearing is difficult to replace as described above, the main bearing is designed in consideration of durability. The main bearing thus becomes larger, and more weight is applied to the top of the tower.

The present invention has been made in such circumstances, and it is an object of the present invention to provide a wind turbine generator in which a main bearing can be replaced without removing a rotor head or a main shaft in a wind turbine.

### {Solution to Problem}

To achieve the above object, a wind turbine generator according to the present invention employs the following solutions.
A wind turbine generator according to the present invention includes: a hub including at least one wind turbine blade; a main shaft connected to the hub at one end; and at least one main bearing that supports the main shaft, wherein the main bearing is a roller bearing, an inner race of the main bearing being divided into a first member that is in contact with the main shaft on a radial inner side and provided with a through hole in an axial direction, and a second member that is provided with a raceway surface of a rolling element on a radial outer side, the main shaft includes a stepped portion having a larger diameter on the hub side, a threaded hole being provided in a wall surface of the stepped portion, and the first member is fastened to the main shaft with a bolt that penetrates through the through hole to be screwed into the threaded hole.

In accordance with the configuration, when the bolt penetrates through the through hole formed in the first member of the inner race to be screwed into the threaded hole formed in the wall surface of the stepped portion of the main shaft, the first member of the inner race is integrated with the main shaft with the bolt. As a result, when the main shaft rotates, the inner race of the main bearing rotates integrally with the main shaft. Meanwhile, when components of the main bearing are replaced, the main shaft and the first member of the inner race integrated together can be separately treated by removing the bolt. Accordingly, the components of the main bearing of the wind turbine can be easily replaced unlike in a case in which the inner race is fitted to the main shaft by shrink fitting.
The second member of the inner race is provided with the raceway surface of the rolling element, and thus tends to fatigue due to the rolling element. Since the second member is a separate member from the first member, the first member and the second member can be separately treated. Accordingly, only the fatigued second member can be replaced.

In the above invention, the first member may radially expand by tightening the bolt.
In accordance with the configuration, the first member radially expands by tightening the bolt so as to fix the first member to the main shaft, and the expanded first member presses the second member. The first member and the second member are thereby fixed to each other and integrated together. To cause the first member to radially expand, for example, a method of holding the first member between a bolt head and the main shaft, or a method of forming an outer circumferential surface of a bolt shank and an inner circumferential surface of the through hole of the first member in a tapered shape may be employed.

In the above invention, an outer diameter of an outer circumferential surface of the first member at a position corresponding to the through hole may be formed smaller than an outer diameter thereof at another position.
In accordance with the configuration, when the bolt is tightened in the through hole, the periphery of the through hole of the first member radially expands. The periphery of the through hole thereby has a diameter almost equal to the outer diameter of an area other than the periphery of the through hole, and the outer circumferential surface of the first member is deformed into an almost true circle. Since the outer circumferential surface of the first member is deformed into an almost true circle, the raceway surface as an outer circumferential surface of the second member is not deformed. Accordingly, the durability of the main bearing is not reduced.

In the above invention, an outer race of the main bearing may include a body portion where the raceway surface of the rolling element is formed, and a flange portion that projects toward the rolling element at an axial end portion, and is detachable/attachable to the body portion.
In accordance with the configuration, the flange portion of the outer race projects toward the rolling element at the axial end portion of the outer race, and normally holds the rolling element on the raceway surface. When the flange portion is detached, the rolling element can be axially pulled out. The rolling element can be thereby easily replaced.

### {Advantageous Effects of Invention}

In accordance with the present invention, the inner race of the main bearing is fixed to the main shaft with the bolt, and the inner race can be moved along the main shaft by removing the bolt. Consequently, the main bearing can be replaced without removing the rotor head or the main shaft in the wind turbine.

### {Brief Description of Drawings}

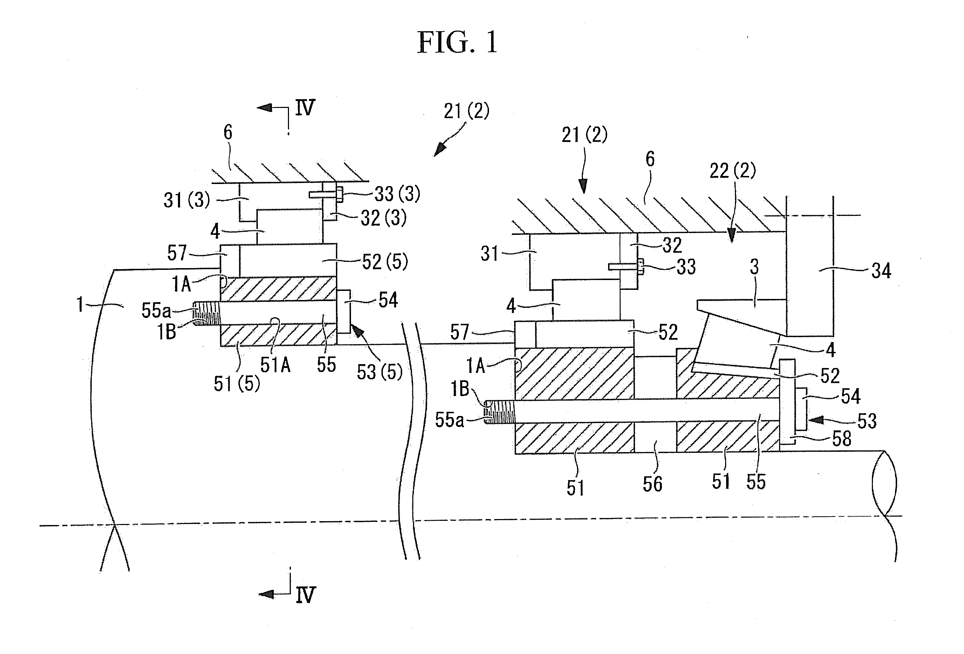

{Fig. 1}
   Fig. 1 is a vertical sectional view illustrating a main bearing according to one embodiment of the present invention.
{Fig. 2}
   Fig. 2 is a perspective view illustrating a bearing housing according to one embodiment of the present invention.
{Fig. 3}
   Fig. 3 is a perspective view illustrating a wind turbine.
{Fig. 4}
   Fig. 4 is an enlarged sectional view taken along a line IV-IV in Fig. 1 illustrating substantially one-quarter of the entire circumference of the main bearing.
{Fig. 5}
   Fig. 5 is a schematic view illustrating the main bearing according to one embodiment of the present invention in the process of removing the main bearing.
{Fig. 6}
   Fig. 6 is a schematic view illustrating the main bearing according to one embodiment of the present invention in the process of removing the main bearing.
{Fig. 7} Fig. 7 is a sectional view illustrating a first member of an inner race of the main bearing according to one embodiment of the present invention.
{Fig. 8} Fig. 8 is a sectional view illustrating the first member of the inner race of the main bearing according to one embodiment of the present invention.

### {Description of Embodiments}

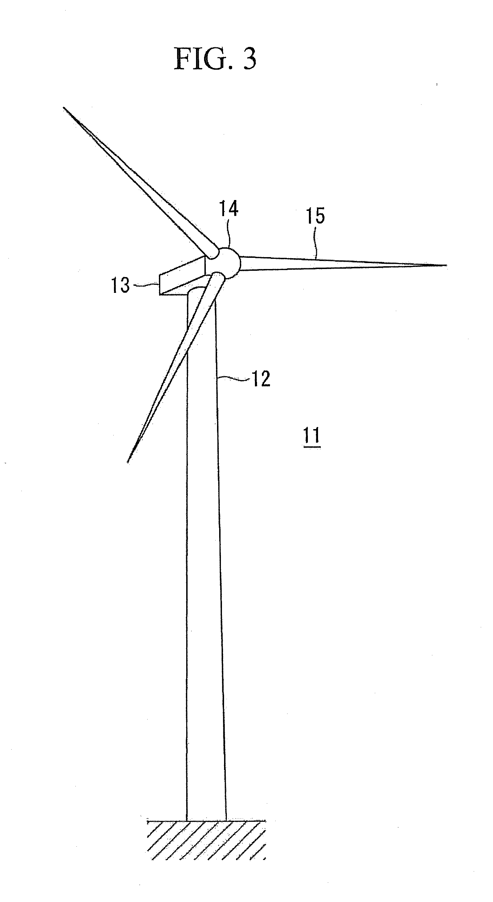

In the following, a main bearing for a wind turbine according to one embodiment of the present invention will be described by reference to the drawings.
A wind turbine 11 used in a wind turbine generator includes a tower 12, a nacelle 13, a rotor head 14, and a plurality of blades 15 as shown in, for example, Fig. 3. The blades 15 are connected to a hub (not shown) inside the rotor head 14 via a slewing ring bearing so as to be rotatable (swingable) about a blade axis that extends in a blade longitudinal direction. A pitch angle of each blade 15 is thereby adjusted.

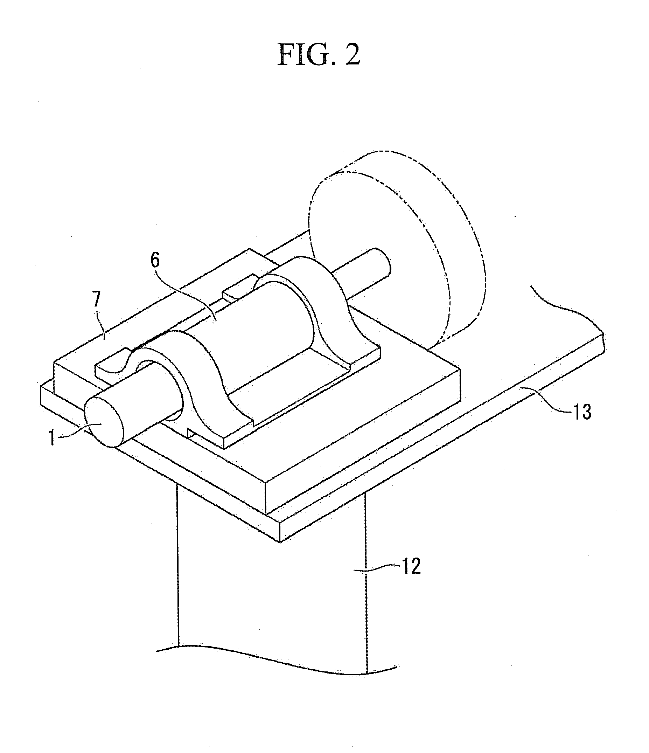

The blades 15 receive wind to rotate about a main shaft 1 that is connected to the hub (not shown) inside the rotor head 14. One end of the main shaft 1 is connected to the hub, and the other end of the main shaft 1 is connected to a generator (not shown) directly or via a gear box or a hydraulic pump/motor provided inside the nacelle 13. The main shaft 1 is supported by a main bearing 2 (see Fig. 1) inside a bearing housing 6 (see Fig. 2) in the nacelle 13. The bearing housing 6 is installed on a base 7 of the nacelle 13. The bearing housing 6 can be divided into, for example, an upper half portion and a lower half portion.

As shown in Fig. 1, a plurality of main bearings are installed as the main bearing 2 on the main shaft 1. A cylindrical roller bearing 21 is provided with respect to a radial load of the main shaft 1, and a tapered roller bearing 22 is provided with respect to an axial load of the main shaft 1. In the example shown in Fig. 1, one cylindrical roller bearing 21 is provided on the rotor head 14 side, and one cylindrical roller bearing 21 is provided on the generator side. One tapered roller bearing 22 is provided closer to the generator than the cylindrical roller bearing 21 on the generator side. Each of the cylindrical roller bearings 21 and the tapered roller bearing 22 includes an outer race 3, a roller 4 (a roller element), and an inner race 5.

The outer race 3 is installed in a ring shape along an inner circumferential surface of the bearing housing 6. The outer race 3 includes flanges that project toward the axis of the outer race 3, that is, toward the roller 4 at both axial end portions. The flanges prevent axial movement of the roller 4 to hold the roller 4 on a raceway surface.

The outer race 3 may be axially divided into a body portion 31 and a flange portion 32 as in the cylindrical roller bearings 21 in Fig. 1. The flange portion 32 is coupled to the body portion 31 on the generator side with a bolt 33, and can be detached from the body portion 31 by loosening the bolt 33. The roller 4 can be thereby easily removed axially from the generator side. The outer race 3 of the tapered roller bearing 22 shown in Fig. 1 is fixed to the bearing housing 6 via a support member 34. The support member 34 can be detachable/attachable to the bearing housing 6. The support member 34 is removed when the main bearing 2 is replaced.

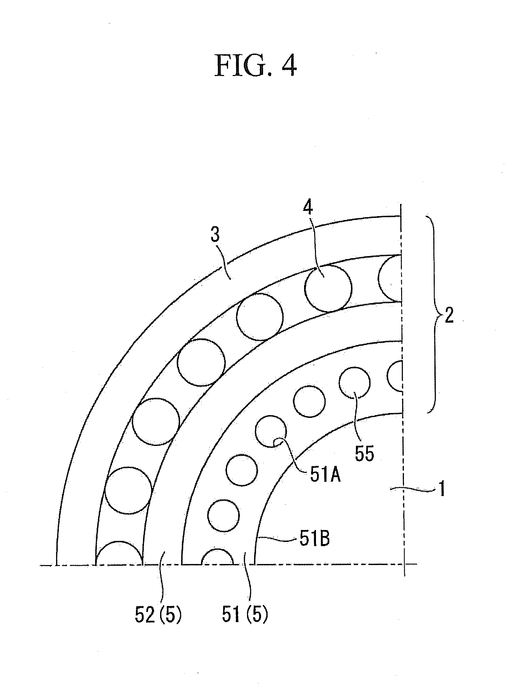

The roller 4 is installed between the outer race 3 and the inner race 5 as shown in Fig. 4. A plurality of rollers are circumferentially installed as the roller 4 at substantially equal intervals. The roller 4 has a cylindrical shape in the case of the cylindrical roller bearing 21, and a conical frustum shape in the case of the tapered roller bearing 22.

The inner race 5 is fixed to the main shaft 1 with a bolt as shown in Fig. 1. The inner race 5 is installed along an outer circumferential surface of the main shaft 1. The inner race 5 is radially divided into a plurality of ring-shaped members (a first member 51 and a second member 52). The first member 51 and the second member 52 are arranged in a concentric fashion as shown in Fig. 4.

The first member 51 is located on the main shaft 1 side, that is, on an inner circumferential side of the inner race 5. The second member 52 is located on the roller 4 side, that is, on an outer circumferential side of the inner race 5. The second member 52 is in contact with the plurality of rollers 4 on an outer circumferential surface. The main shaft 1 is provided penetrating through an opening portion 51B that is formed in the center of the first member 51. As shown in Fig. 1, a stopper 57 may be installed or formed on an outer circumferential surface of the first member 51 on the rotor head 14 side to fix the position of the second member 52.

A through hole 51A through which a bolt 53 penetrates is formed in the first member 51. A plurality of through holes are circumferentially formed as the through hole 51A in the first member 51. An opening direction of the through hole 51A is parallel to the axial direction.

A stepped portion 1A is also formed at the main shaft 1 by forming a portion having a different diameter in the axial direction. The first member 51 is installed in contact with a wall surface (a surface perpendicular to the axial direction of the main shaft 1) of the stepped portion 1A. A threaded hole 1B is formed in the wall surface of the stepped portion 1A of the main shaft 1 corresponding to each through hole 51A of the first member 51. An axial direction of the threaded hole 1B is parallel to the axial direction of the main shaft 1. The threaded hole 1B opens toward the generator.

The first member 51 is fixed to the main shaft 1 by passing the bolt 53 through the through hole 51A of the first member 51 and screwing a male threaded portion 55a formed on a bolt shank 55 into the threaded hole 1B. Two first members 51 may be fixed to the main shaft 1 with one bolt 53. In the example shown in Fig. 1, both the first members 51 of the cylindrical roller bearing 21 on the generator side and the tapered roller bearing 22 are fixed to the main shaft 1 with one bolt 53. A separation member 56 is also installed between the two first members 51. The first member 51 and the second member 52 of the inner race 5 of the tapered roller bearing 22 shown in Fig. 1 are fixed to each other with a bolt head 54 of the bolt 53 via a plate-like member 58. The plate-like member 58 is provided on a generator-side end surface of the tapered roller bearing 22.

The first member 51 is held between the bolt head 54 of the bolt 53 and the main shaft 1 to be axially compressed. The first member 51 thereby radially expands by about 500 µm. As a result, the outer circumferential surface of the first member 51 and an inner circumferential surface of the second member 52 come into close contact with each other, and the first member 51 and the second member 52 receive a radial pressure to be fixed to each other. Accordingly, the first member 51 and the second member 52 constituting the inner race 5 become an integrated member.

Meanwhile, when the bolt 53 is removed, the radial expansion of the first member 51 is restored to its original state. A contact pressure between the first member 51 and the second member 52 is thereby reduced, so that the first member 51 and the second member 52 are loosened from each other.

Although the case in which the threaded hole 1B is formed in the stepped portion 1A of the main shaft 1 and the bolt 53 is inserted into the main shaft 1 from the generator side has been described in the aforementioned embodiment, the present invention is not limited thereto. For example, a bolt shank may project parallel to the axial direction from the stepped portion 1A of the main shaft 1. The bolt shank projecting from the stepped portion 1A may be passed through the through hole 51A of the first member 51 to fasten the first member 51 using a nut from the generator side. To cause the bolt shank to project from the stepped portion 1A, a method of inserting a stud bolt into the threaded hole 1B formed in the stepped portion 1A from the rotor head 14 side may be employed.

Although the case in which the bolt shank 55 of the bolt 53 has a columnar shape has been described using Fig. 1, the present invention is not limited thereto. For example, the bolt 53 may have a tapered shape in which the bolt shank 55 becomes thinner toward a distal end from the bolt head 54. The through hole 51A of the first member 51 may be formed to have a tapered surface corresponding to the tapered bolt shank 55. Accordingly, when the bolt 53 is inserted into the first member 51 and screwed into the main shaft 1, the first member 51 radially expands by the bolt shank 55.

Next, a method for mounting and removing the main bearing 2 to and from the main shaft 1 at the time of maintenance of the wind turbine generator will be described.
When the wind turbine generator is in an operating state, the first member 51 of the inner race 5 is coupled to the main shaft 1 with the bolt 53 as shown in Fig. 1. The first member 51 also radially expands. The outer circumferential surface of the first member 51 and the inner circumferential surface of the second member 52 thereby come into contact with each other and receive a pressure. Accordingly, the second member 52 is fixed to the first member 51.

When the operation of the wind turbine generator is stopped to perform maintenance of the main bearing 2 in the above state, the main shaft 1 and the devices on the generator side are disconnected first. The upper half portion of the bearing housing 6 that houses the main bearing 2 is removed to expose the main bearing 2. After that, the plurality of bolts 53 that penetrate through the through holes 51A of the first member 51 to be tightened to the main shaft 1 are loosened. The first member 51 can be thereby released from the main shaft 1. The radial expansion of the first member 51 is also restored to its original state to reduce the contact pressure between the first member 51 and the second member 52. Accordingly, the first member 51 and the second member 52 can be separately removed in the axial direction.

In the outer race 3 in which the body portion 31 and the flange portion 32 are fastened with the bolt 33, the flange portion 32 is detached from the body portion 31 by removing the bolt 33. Accordingly, the outer race 3 and the roller 4 can be separately removed in the axial direction.

The first member 51 and the second member 52 of the inner race 5, the body portion 31 of the outer race 3, and the roller 4 can be moved along the main shaft 1 as described above. When any member out of the first member 51, the second member 52, the roller 4, and the body portion 31 of the outer race 3 needs to be replaced, the member is moved and removed from the main shaft 1.

An upward load is hardly applied to the main bearing 2 from the main shaft 1. Thus, even when the raceway surface of the outer race 3 is divided in an upper portion of the body portion 31 of the outer race 3, its division connection line does not affect rolling of the roller 4. Therefore, the outer race 3 may be circumferentially divided in the upper portion. The outer race 3 can be thereby composed of divided members, so that the outer race 3 is easily replaced. The body portion 31 of the outer race 3 receives a load on only a portion of the raceway surface. Thus, even when the portion to which the load is applied is worn away or the like to a degree which requires replacement, the outer race 3 may be circumferentially rotated to receive a load on a sound portion of the raceway surface to which no load has been applied without replacing the outer race 3.

When the main bearing 2 removed for maintenance is mounted to the main shaft 1, the first member 51 is installed at a predetermined place on the outer circumferential surface of the main shaft 1 first. Subsequently, the second member 52 is passed through the main shaft 1 and installed on the outer circumferential surface of the first member 51.

The body portion 31 of the outer race 3 is also installed at a predetermined place on the bearing housing 6. The roller 4 is inserted between the outer circumferential surface of the second member 52 and an inner circumferential surface of the body portion 31 of the outer race 3. Moreover, the bolt 53 is passed through the through hole 51A of the first member 51 to be screwed into the threaded hole 1B of the main shaft 1. When the bolt 53 is completely tightened, the first member 51 is fixed to the main shaft 1, and the first member 51 radially expands. As a result, the first member 51 and the second member 52 are integrated together due to the contact pressure between the first member 51 and the second member 52.

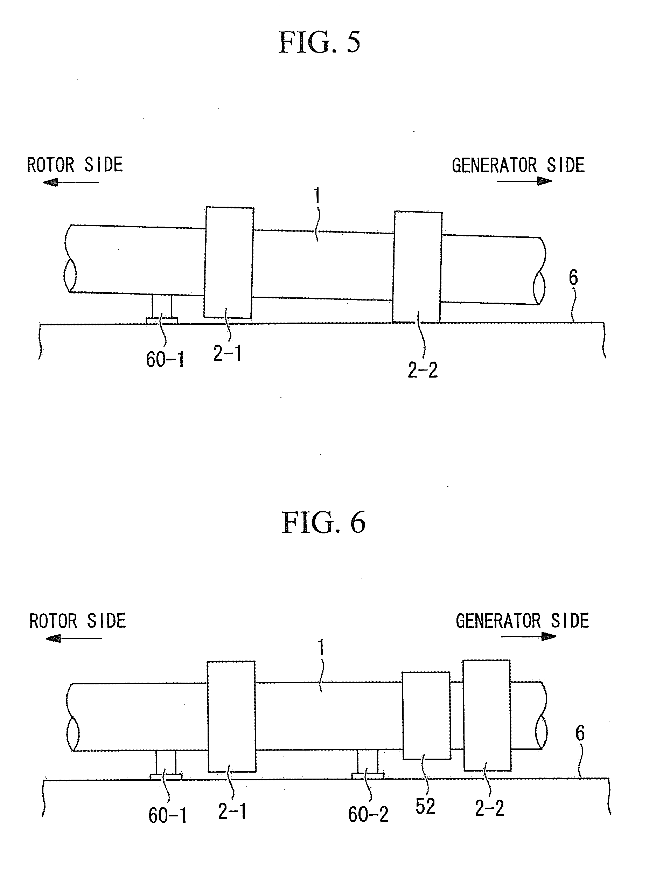

Next, a method for removing a plurality of main bearings 2 installed on one main shaft 1 will be described.
First, as shown in Fig. 5, the main shaft 1 is supported at a position on the rotor head 14 side by using, for example, a hydraulic jack 60-1 in a state in which the upper half portion of the bearing housing 6 is removed. The first member 51 and the second member 52 of a main bearing 2-1 on the rotor head 14 side are released from each other by loosening the bolt 53. A member required to be replaced in the main bearing 2-1 (e.g., the second member 52 or the roller 4) is axially moved in the above state. When the second member 52 is required to be replaced, the second member 52 is moved to a position close to a main bearing 2-2 on the generator side along the main shaft 1. When the roller 4 is required to be replaced, the roller 4 is pulled out in the axial direction of the main shaft 1 from between the outer race 3 and the inner race 5.

Subsequently, the main shaft 1 is supported at a position on the generator side by using another hydraulic jack 60-2 as shown in Fig. 6. The main shaft 1 is thereby supported by the two jacks 60-1 and 60-2. The first member 51 and the second member 52 of the main bearing 2-2 on the generator side are released from each other by loosening the bolt 53. After that, the second members 52 of the main bearings 2-1 and 2-2 on the rotor head 14 side and the generator side are moved toward the generator, or the roller 4 of the main bearing 2-2 on the generator side is pulled out in the axial direction of the main shaft 1 from between the outer race 3 and the inner race 5.

The body portion 31 of the outer race 3 may be axially moved to be pulled out of the main shaft 1 in a similar manner to the second member 52 of the inner race 5. The outer race 3 of the cylindrical roller bearing 21 is a member fixed to the base 7, and mainly supports a load on only a portion of the raceway surface on the circumference. Therefore, it is not always necessary to replace the outer race 3. The outer race 3 may be circumferentially rotated to employ a sound portion to which no load has been applied as a new load support portion.

The members of the main bearings 2-1 and 2-2 on the rotor head 14 side and the generator side can be replaced in a state in which the main shaft 1 is supported by the jacks as described above.

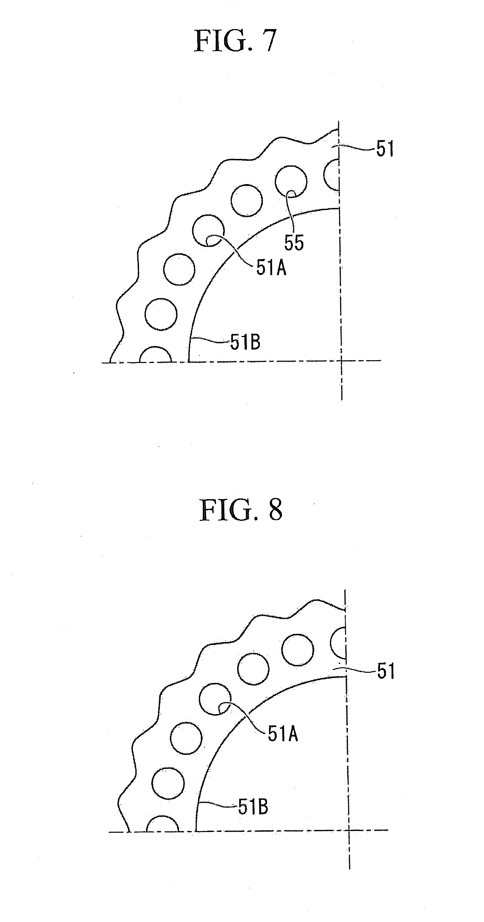

Next, the first member 51 of the inner race 5 will be described in detail.
The first member 51 is fastened with the bolts 53 to radially expand. When the bolts 53 are circumferentially arranged as shown in, for example, Fig. 4, the outer circumferential surface of the first member 51 is deformed into a flower-like (sine wave-like) shape corresponding to the through holes 51A as shown in Fig. 7 by tightening the bolts 53. When the first member 51 is deformed, a raceway surface as the outer circumferential surface of the second member 52 may be deformed. The durability of the main bearing 2 may be thereby reduced.

To solve the problem, the bolts 53 may be arranged as close as possible to each other on the circumference in the first member 51 as shown in Fig. 4. The deformation of the first member 51 (the amplitude of the sine wave) can be thereby reduced as compared to a case in which there are fewer bolts on the circumference. The raceway surface can be maintained in an almost true circle.

The outer circumferential surface of the first member 51 may be also processed into a sine wave-like shape out of phase with the sine wave in Fig. 7 by 180° in advance as shown in Fig. 8. That is, the outer diameter of the outer circumferential surface of the first member 51 at a position corresponding to the through holes 51A may be formed smaller than the outer diameter thereof at another position in advance. Accordingly, when the bolts 53 are tightened in the through holes 51A, the peripheries of the through holes 51A of the first member 51 radially expand to have a diameter almost equal to the outer diameter of an area other than the peripheries of the through holes 51A. The outer circumferential surface of the first member 51 is thereby deformed into an almost true circle.

Since the outer circumferential surface of the first member 51 is deformed into an almost true circle by tightening the bolts 53, the raceway surface as the outer circumferential surface of the second member 52 is not deformed. Accordingly, the durability of the main bearing 2 is not reduced.

In accordance with the present embodiment, the main bearing 2 can be removed from the main shaft 1, and the respective members of the main bearing 2 can be divided, so that the respective members are easily replaced. That is, in the conventional rotor head including the blades, the main shaft and the main bearing are integrated together. Thus, when the main bearing is replaced, the entire nacelle needs to be brought down to the bottom of the tower to perform the replacement. In the present embodiment, however, the replacement can be performed within the nacelle 13 by only using a crane installed in the nacelle 13. It thus takes much less time and cost for the maintenance. Since the members can be originally designed in consideration of replacement, the respective members can be also downsized. The weight on the top of the tower can be thereby reduced.

Furthermore, the main bearing 2 tends to fatigue due to a high stress at a position close to the outer circumferential surface of the second member 52 of the inner race 5 and the inner circumferential surface of the outer race 3 as the raceway surfaces of the roller 4. In the present embodiment, the inner race 5 of the main bearing 2 is radially divided into the first member 51 on the main shaft 1 side and the second member 52 on the roller 4 side. Thus, only the second member 52 of the inner race 5 can be replaced. Accordingly, only the fatigued component can be replaced without replacing the entire inner race 5.

Although the case in which the inner race 5 is divided into the first member 51 and the second member 52 has been described in the aforementioned embodiment, the present invention is not limited thereto. The inner race 5 may not be radially divided, but may be provided as a single member as long as the inner race 5 can be fixed to and released from the main shaft 1 with a bolt.

### {Reference Signs List}

- 1: Main shaft
- 1A: Stepped portion
- 1B: Threaded hole
- 2: Main bearing
- 3: Outer race
- 4: Roller (rolling element)
- 5: Inner race
- 6: Bearing housing
- 11: Blade
- 21: Cylindrical roller bearing
- 22: Tapered roller bearing
- 31: Body portion
- 32: Flange portion
- 33, 53: Bolt
- 51: First member
- 51A: Through hole
- 52: Second member
- 55: Bolt shank
- 55a: Male threaded portion

## Claims

1. A wind turbine generator comprising:
a hub including at least one wind turbine blade (15);
a main shaft (1) connected to the hub at one end; and
at least one main bearing (2) that supports the main shaft (1),
wherein the main bearing (2) is a roller bearing (21), an inner race (5) of the main bearing being divided into a first member (51) that is in contact with the main shaft (1) on a radial inner side and provided with a through hole (51A) in an axial direction, and a second member (52) that is provided with a raceway surface of a rolling element (4) on a radial outer side,
the main shaft (1) includes a stepped portion (1A) having a larger diameter on the hub side, a threaded hole (1B) being provided in a wall surface of the stepped portion, and
the first member (51) is fastened to the main shaft with a bolt (53) that penetrates through the through hole (51A) to be screwed into the threaded hole (1B).

2. The wind turbine generator according to claim 1, wherein the first member (51) radially expands by tightening the bolt (53).

3. The wind turbine generator according to claim 1 or 2, wherein an outer diameter of an outer circumferential surface of the first member (51) at a position corresponding to the through hole (51A) is formed smaller than an outer diameter thereof at another position.

4. The wind turbine generator according to any one of claims 1 to 3, wherein an outer race (3) of the main bearing (2) includes a body portion (31) where a raceway surface of the rolling element (4) is formed, and a flange portion (32) that projects toward the rolling element (4) at an axial end portion, and is detachable/attachable to the body portion (31).
